# EUROPÄISCHE PATENTSCHRIFT

(11) **EP 2 932 135 B1**
(45) Veröffentlichungstag und Bekanntmachung des Hinweises auf die Patenterteilung: **12.09.2018**
(21) Anmeldenummer: 13802310.6
(22) Anmeldetag: 02.12.2013
(51) Int. Cl.: F16H 47/04

(54) **LEISTUNGSVERZWEIGUNGSGETRIEBE MIT VERSCHIEDENEN BETRIEBSZUSTÄNDEN**
POWER-SPLIT GEARBOX WITH DIFFERENT OPERATING STATES
TRANSMISSION À DIVISION DE PUISSANCE AVEC DIFFÉRENTS ÉTATS DE FONCTIONNEMENT

(30) Priorität: 17.12.2012 DE 102012112400; 29.10.2013 DE 102013111907
(43) Veröffentlichungstag der Anmeldung: 21.10.2015
(73) Patentinhaber: Linde Hydraulics GmbH & Co. KG, 63743 Aschaffenburg (DE)
(72) Erfinder: STÜRMER, Burkhard, 63801 Kleinostheim (DE)
(74) Vertreter: Patentship Patentanwaltsgesellschaft mbH
(86) Internationale Anmeldenummer: PCT/EP2013/075195
(87) Internationale Veröffentlichungsnummer: WO 2014/095317

(56) Entgegenhaltungen:
- EP-A1- 0 552 140
- EP-A1- 1 655 515
- EP-A2- 1 626 206
- EP-A2- 2 034 221
- DE-A1- 10 248 400
- DE-A1-102007 037 107
- US-A- 3 783 711
- US-A- 4 306 467
- US-A- 5 667 452
- US-A1- 2003 125 147

## Beschreibung

Die Erfindung betrifft ein Leistungsverzweigungsgetriebe eines Fahrantrieb eines Fahrzeugs, mit einem hydrostatischen stufenlosen Getriebe und einem Summierplanetengetriebe, das als einfaches Planetengetriebe ausgebildet ist, das aus einem Sonnenrad, einem Hohlrad und einem mehrere Planetenräder tragenden Planetenträger besteht, wobei die Planetenräder mit dem Sonnenrad und dem Hohlrad in Eingriff stehen, wobei das Summierplanetengetriebe antriebsseitig mit einem Antriebsmotor des Fahrzeugs, insbesondere einem Verbrennungsmotor, und dem hydrostatischen Getriebe in Verbindung bringbar ist und das hydrostatische Getriebe eine im Fördervolumen verstellbare Verstellpumpe und einen Hydromotor umfasst, wobei der Hydromotor im geschlossenen Kreislauf mittels Druckmittelleitungen mit der Verstellpumpe verbunden ist, wobei die Verstellpumpe von dem Antriebsmotor angetrieben ist, der Hydromotor zum Antrieb mit einem ersten Antriebselement des Summierplanetengetriebes in trieblicher Verbindung bringbar ist, der Antriebsmotor zum Antrieb mit einem zweiten Antriebselement des Summierplanetengetriebes in trieblicher Verbindung bringbar ist und ein Abtriebselement des Summierplanetengetriebes mit einem Radantrieb oder Achsantrieb des Fahrzeugs trieblich in Verbindung steht.

Derartige Leistungsverzweigungsgetriebe arbeiten über den gesamten Geschwindigkeitsbereich des Fahrzeugs mit einer Leistungsverzweigung, in der in dem Summierplanetengetriebe die über den mechanischen Getriebezweig, der von dem Antriebsmotor und dem von dem Antriebsmotor angetriebenen Antriebselement des Summierplanetengetriebes gebildet ist, übertragene Leistung und die über den hydrostatischen Getriebezweig, die von dem hydrostatischen Getriebe und dem von dem Hydromotor angetriebenen Antriebselement des Summierplanetengetriebes gebildet ist, übertragende Leistung zusammengeführt wird.

Aus der gattungsbildenden DE 102 48 400 A1 ist ein Leistungsverzweigungsgetriebe eines Fahrantriebs eines Fahrzeugs mit einem Summierplanetengetriebe bekannt, das eine Betriebsart mit leistungsverzweigter Energieübertragung und eine Betriebsart mit rein hydrostatischer Energieübertragung aufweist. Die EP 1 626 206 A2, die EP 1 655 515 A1, die US 5 667 452 A, die DE 10 2007 037 107 A1 und die US 2003/0125147 A1 offenbaren jeweils ein Leistungsverzweigungsgetriebe eines Fahrantriebs eines Fahrzeugs mit einem Summierplanetengetriebe, bei dem das Summierplanetengetriebe eine Betriebsart mit leistungsverzweigter Energieübertragung und eine Betriebsart mit rein hydrostatischer Energieübertragung aufweist und zwischen diesen beiden Betriebsarten umschaltbar ist.

Die US 4 306 467 A offenbart ein Leistungsverzweigungsgetriebe eines Fahrantriebs eines Fahrzeugs mit einem aus mindestens zwei Planetengetrieben bestehenden Summierplanetengetriebe, bei dem mit den zwei Planetengetrieben eine Betriebsart mit rein hydrostatischer Energieübertragung (Mode I) und zwei Betriebsarten (Mode II, Mode III) mit leistungsverzweigter Energieübertragung erzielbar sind.

Die EP 2 034 221 A1 ist ein Leistungsverzweigungsgetriebe eines Fahrantriebs eines Fahrzeugs mit einem Summierplanetengetriebe beschrieben, bei dem das Summierplanetengetriebe für die Vorwärtsfahrt eine Betriebsart mit leistungsverzweigter Energieübertragung und für die Rückwärtsfahrt eine Betriebsart mit rein hydrostatischer Energieübertragung aufweist.

Die EP 0 552 140 A1 offenbart ein Leistungsverzweigungsgetriebe mit einem Summierplanetengetriebe, das insgesamt 16 Betriebszustände ermöglicht.

Die US 3 783 711 A ist ein Leistungsverzweigungsgetriebe bekannt, das mehrere Betriebsarten mit unterschiedlicher Leistungsübertragung ermöglicht. Das Summierplanetengetriebe des Leistungsverzweigungsgetriebes weist hierzu ein erstes Planetengetriebe und ein zweites Planetengetriebe auf.

Der vorliegenden Erfindung liegt die Aufgabe zugrunde, ein Leistungsverzweigungsgetriebe der eingangs genannten Gattung zur Verfügung zu stellen, das bei geringem Bauaufwand des Summierplanetengetriebes in verschiedenen Betriebsarten betrieben werden kann.

Diese Aufgabe wird erfindungsgemäß dadurch gelöst, dass das Summierplanetengetriebe eine Betriebsart mit leistungsverzweigter Energieübertragung, eine Betriebsart mit rein hydrostatischer Energieübertragung und eine Betriebsart mit rein mechanischer Leistungsübertragung aufweist, wobei das Summierplanetengetriebe mit Kupplungseinrichtungen versehen ist, mit denen das Summierplanetengetriebe während der Fahrt an einem Schaltpunkt zwischen der Betriebsart mit leistungsverzweigter Leistungsübertragung und einer weiteren Betriebsart mit einer reinen hydrostatischen Leistungsübertragung oder einer reinen mechanischen Leistungsübertragung ohne Zugkraftunterbrechung umschaltbar ist oder wobei das Summierplanetengetriebe mit Kupplungseinrichtungen versehen ist, mit denen das Summierplanetengetriebe während der Fahrt an einem Schaltpunkt zwischen der Betriebsart mit einer reinen mechanischen Leistungsübertragung und einer weiteren Betriebsart mit einer reinen hydrostatischen Leistungsübertragung oder einer leistungsverzweigten Leistungsübertragung ohne Zugkraftunterbrechung umschaltbar ist. Das erfindungsgemäße Leistungsverzweigungsgetriebe ermöglicht somit auf einfache Weise und mit geringem Bauaufwand durch zusätzliche Kupplungseinrichtungen einen Wechsel ohne Zugkraftunterbrechung zwischen einer Betriebsart und somit einem Betriebsmodus mit leistungsverzweigter Leistungsübertragung und einer weiteren Betriebsart und somit einem Betriebsmodus, in dem eine reine hydrostatische Leistungsübertragung oder eine reine mechanische Leistungsübertragung stattfindet bzw. zwischen einer Betriebsart und somit einem Betriebsmodus mit reiner mechanischer Leistungsübertragung und einer weiteren Betriebsart und somit einem Betriebsmodus, in dem eine reine hydrostatische Leistungsübertragung oder eine leistungsverzweigte Leistungsübertragung stattfindet. Durch einfache Ergänzung von entsprechenden Kupplungseinrichtungen an dem Summierplanetengetriebe wird es somit auf einfache Weise und mit geringem Bauaufwand ermöglicht, die Art der Leistungsübertragung und somit den Betriebsmodus des Leistungsverzweigungsgetriebes ohne Zugkraftunterbrechung zu wechseln.

Gemäß einer vorteilhaften Ausgestaltungsform der Erfindung herrscht an dem Schaltpunkt Drehzahlgleichheit des Abtriebselements und der Antriebselemente des Summierplanetengetriebes, so dass ohne Korrektur der Getriebeübersetzung des hydrostatischen Getriebes zwischen den Betriebsarten, insbesondere der Betriebsart mit leistungsverzweigter Leistungsübertragung und der weiteren Betriebsart, umgeschaltet werden kann. Die Erfindung nutzt hierbei die Erkenntnis, dass bei einem Leistungsverzweigungsgetriebe bei einer Abnahme der Fahrzeuggeschwindigkeit und somit der Raddrehzahl der angetriebenen Räder der Hydromotor des hydrostatischen Getriebes und somit des hydrostatischen Leistungspfades mit einer hohen Drehzahl gegen die von dem mechanischen Leistungszweig übertragenen Drehzahl des Antriebsmotors drehen muss, um einen Stillstand des Abtriebselements des Summierplanetengetriebes für den Fahrzeugstillstand zu erzeugen. Im Fahrzeugstillstand arbeitet hierbei die Verstellpumpe des hydrostatischen Getriebes in der Nähe eines maximalen Fördervolumens. Zur Beschleunigung des Fahrzeugs wird das Fördervolumen der Verstellpumpe über die Nullstellung mit dem Fördervolumen Null hinaus in die Gegenrichtung auf maximales Fördervolumen verstellt. Bei einem rein hydrostatischen Fahrantrieb mit einer Verstellpumpe und einem im geschlossenen Kreislauf angeschlossenen Hydromotor befindet sich im Fahrzeugstillstand die Verstellpumpe in der Neutralstellung mit dem Fördervolumen Null, wobei durch Verstellen der Pumpe in die beiden Richtungen die Geschwindigkeit des Fahrzeugs in Vorwärtsfahrt und in Rückwärtsfahrt mit zunehmender Verstellung und somit zunehmendem Fördervolumen der Verstellpumpe zunimmt. Sofern ein leistungsverzweigtes Fahren und ein rein hydrostatisches Fahren jeweils mit einem Planetengetriebe und somit gleichen Getriebebauteilen erzeugt werden, gibt es für diese beiden Betriebszustände einen gemeinsamen Betriebspunkt, an dem die Antriebselemente und das Abtriebselement des Planetengetriebes gleiche Drehzahlen aufweisen. An diesem Betriebspunkt wird somit ein Schaltpunkt ermöglicht, der ein stufenloses Schalten, d.h. ein Schalten ohne Geschwindigkeitssprung des Fahrzeugs, ohne Zugkraftunterbrechung und ohne Korrektur des Fördervolumens und somit ohne Veränderung der Verstellung der Verstellpumpe ermöglicht zwischen einer Betriebsart mit leistungsverzweigter Leistungsübertragung und einer weiteren Betriebsart, insbesondere einer Betriebsart mit einer reinen hydrostatischen Leistungsübertragung.

Besondere Vorteile ergeben sich, wenn die Betriebsart mit leistungsverzweigter Leistungsübertragung als Arbeitsgang vom Fahrzeugstillstand bis zu einer Grenzfahrgeschwindigkeit und die weitere Betriebsart mit reiner hydrostatischer Leistungsübertragung bzw. reiner mechanischer Leistungsübertragung als Transportgang zwischen der Grenzfahrgeschwindigkeit und der maximalen Fahrgeschwindigkeit ausgeführt ist. Das erfindungsgemäße Leistungsverzweigungsgetriebe ermöglicht es somit auf einfache Weise, in dem Arbeitsgang mit niedrigen Fahrzeuggeschwindigkeiten durch die Betriebsart mit leistungsverzweigter Leistungsübertragung leistungsverzweigt zu fahren, um hohe Zugkräfte zu erzielen, und in dem Transportgang bei höheren Fahrzeuggeschwindigkeiten, wobei geringere Zugkräfte gefordert sind, durch die weitere Betriebsart insbesondere rein hydrostatisch zu fahren, in der durch Veränderung der Getriebeübersetzung des hydrostatischen Getriebes durch Verstellen der Verstellpumpe und/oder des Hydromotors stufenlos gefahren werden kann.

Vergleichbare Vorteile sind erzielbar, wenn die Betriebsart mit reiner mechanischer Leistungsübertragung als Arbeitsgang vom Fahrzeugstillstand bis zu einer Grenzfahrgeschwindigkeit und die weitere Betriebsart mit einer reinen hydrostatischen Leistungsübertragung bzw. einer leistungsverzweigten Leistungsübertragung als Transportgang zwischen der Grenzfahrgeschwindigkeit und der maximalen Fahrgeschwindigkeit ausgeführt ist. In dem Arbeitsgang können durch die rein mechanische Leistungsübertragung hohe Zugkräfte bei geringen Verlusten erzielt werden.

Gemäß einer vorteilhaften Ausgestaltungsform der Erfindung steht der Hydromotor mit dem Sonnenrad als ersten Antriebselement des Summierplanetengetriebe in trieblicher Verbindung, ist der Antriebsmotor mit dem Hohlrad als zweiten Antriebselement des Summierplanetengetriebe in trieblicher Verbindung bringbar und bildet der Planetenträger des Summierplanetengetriebe das Abtriebselement, wobei eine erste Kupplungseinrichtung vorgesehen ist, mittels der das Hohlrad mit dem Antriebsmotor verbindbar oder trennbar ist, und eine zweite Kupplungseinrichtung vorgesehen ist, mittels der das Sonnenrad mit dem Planetenträger verbindbar oder trennbar ist, wobei in der Betriebsart mit leistungsverzweigter Leistungsübertragung die erste Kupplungseinrichtung geschlossen und die zweite Kupplungseinrichtung geöffnet ist, und in der weiteren Betriebsart mit einer reinen hydrostatischen Leistungsübertragung die erste Kupplungseinrichtung geöffnet und die zweite Kupplungseinrichtung geschlossen ist. Mit der zweiten Kupplungseinrichtung kann somit eine Durchtriebsstellung des Summierplanetengetriebes mit rein hydrostatischer Leistungsübertragung erzielt werden. Mit derartigen Kupplungseinrichtungen kann somit auf einfache Weise und bei geringem Zusatzaufwand an dem Summierplanetengetriebe ein Wechsel zwischen einer Betriebsart mit leistungsverzweigter Leistungsübertragung und einer Betriebsart mit reiner hydrostatischer Leistungsübertragung hin- und hergeschaltet werden.

Bei einem derartigen Leitungsverzweigungsgetriebe kann die Betriebsart mit reiner mechanischer Leistungsübertragung erzielt werden, wenn die erste Kupplungseinrichtung und die zweite Kupplungseinrichtung geschlossen sind. Das Sonnenrad, der Planetenträger und das Hohlrad sind somit miteinander verblockt. Sofern das hydrostatische Getriebe derart betrieben wird, dass das Hohlrad die Abtriebsdrehzahl des Abtriebselements aufweist und das hydrostatische Getriebe keine Leistung überträgt und in einem verlustarmen Betrieb arbeitet, ergibt sich eine reine mechanische Leistungsübertragung. Mit derartigen Kupplungseinrichtungen kann somit auf einfache Weise und bei geringem Zusatzaufwand an dem Summierplanetengetriebe ein Wechsel zwischen einer Betriebsart mit reiner mechanischer Leistungsübertragung und einer Betriebsart mit reiner hydrostatischer Leistungsübertragung bzw. leistungsverzweigter Leistungsübertragung hin- und hergeschaltet werden.

Gemäß einer vorteilhaften Ausgestaltungsform der Erfindung steht der Hydromotor mit dem Sonnenrad als ersten Antriebselement des Summierplanetengetriebes in trieblicher Verbindung, ist der Antriebsmotor mit dem Hohlrad als zweiten Antriebselement des Summierplanetengetriebe in trieblicher Verbindung bringbar, bildet der Planetenträger des Summierplanetengetriebe das Abtriebselement und ist der Antriebsmotor mittels einer Durchtriebswelle mit dem Planetenträger trieblich verbindbar, wobei eine erste Kupplungseinrichtung vorgesehen ist, mittels der das Hohlrad mit dem Antriebsmotor verbindbar oder trennbar ist, und eine zweite Kupplungseinrichtung vorgesehen ist, mittels der die Durchtriebswelle mit dem Planetenträger verbindbar oder trennbar ist, wobei in der Betriebsart mit leistungsverzweigter Leistungsübertragung die erste Kupplungseinrichtung geschlossen und die zweite Kupplungseinrichtung geöffnet ist, und in der weiteren Betriebsart mit einer reinen mechanischen Leistungsübertragung die erste Kupplungseinrichtung geöffnet und die zweite Kupplungseinrichtung geschlossen ist. Mit der zweiten Kupplungseinrichtung kann somit eine Durchtriebsstellung des Summierplanetengetriebes mit rein mechanischer Leistungsübertragung von dem Antriebsmotor erzielt werden. Mit derartigen Kupplungseinrichtungen kann somit auf einfache Weise und bei geringem Zusatzaufwand an dem Summierplanetengetriebe ein Wechsel zwischen einer Betriebsart mit leistungsverzweigter Leistungsübertragung und einer Betriebsart mit reiner mechanischer Leistungsübertragung hin- und hergeschaltet werden.

Zweckmäßigerweise befindet sich in der weiteren Betriebsart mit einer reinen mechanischen Leistungsübertragung die Verstellpumpe in der Nullstellung mit Fördermenge Null.

Gemäß einer vorteilhaften Weiterbildung der Erfindung ist eine weitere Kupplungseinrichtung vorgesehen, mittels der das Hohlrad im Stillstand festsetzbar ist, wobei bei geschlossener weitere Kupplungseinrichtung, bei geöffneter erster Kupplungseinrichtung und geöffneter zweiter Kupplungseinrichtung eine zusätzliche Betriebsart mit rein hydrostatischer Leistungsübertragung erzielbar ist. Durch eine zusätzliche Kupplungseinrichtung kann somit mit geringem Bauaufwand an einem derartigen Summierplanetengetriebe eine zusätzliche Betriebsart mit reiner hydrostatischer Leistungsübertragung erzielt werden.

Gemäß einer alternativen Ausführungsform der Erfindung ist Hydromotor mit dem Hohlrad als ersten Antriebselement des Summierplanetengetriebe in trieblicher Verbindung bringbar, ist der Antriebsmotor mittels einer Durchtriebswelle mit dem Sonnenrad als zweiten Antriebselement des Summierplanetengetriebe in trieblicher Verbindung bringbar und bildet der Planetenträger des Summierplanetengetriebe das Abtriebselement, wobei eine erste Kupplungseinrichtung vorgesehen ist, mittels der das Hohlrad mit dem Hydromotor verbindbar oder trennbar ist, und eine zweite Kupplungseinrichtung vorgesehen ist, mittels der das Sonnenrad mit dem Planetenträger verbindbar oder trennbar ist, wobei in der Betriebsart mit leistungsverzweigter Leistungsübertragung die erste Kupplungseinrichtung geschlossen und die zweite Kupplungseinrichtung geöffnet ist, und in der weiteren Betriebsart mit einer reinen mechanischen Leistungsübertragung die erste Kupplungseinrichtung geöffnet und die zweite Kupplungseinrichtung geschlossen ist. Mit der zweiten Kupplungseinrichtung kann somit eine Durchtriebsstellung des Summierplanetengetriebes mit rein mechanischer Leistungsübertragung von dem Antriebsmotor erzielt werden. Mit derartigen Kupplungseinrichtungen kann somit auf einfache Weise und bei geringem Zusatzaufwand an dem Summierplanetengetriebe ein Wechsel zwischen einer Betriebsart mit leistungsverzweigter Leistungsübertragung und einer Betriebsart mit reiner mechanischer Leistungsübertragung hin- und hergeschaltet werden.

Gemäß einer vorteilhaften Weiterbildung der Erfindung ist eine weitere Kupplungseinrichtung vorgesehen, mittels der das Sonnenrad mit der Durchtriebswelle verbindbar oder trennbar ist, wobei bei geschlossener erster Kupplungseinrichtung, bei geschlossener zweiter Kupplungseinrichtung und bei geöffneter weiterer Kupplungseinrichtung eine zusätzlicher Betriebsart mit rein hydrostatischer Leistungsübertragung erzielbar ist. Durch eine zusätzliche Kupplungseinrichtung kann somit mit geringem Bauaufwand an einem derartigen Summierplanetengetriebe eine zusätzliche Betriebsart mit reiner hydrostatischer Leistungsübertragung erzielt werden.

Gemäß einer bevorzugten Ausgestaltungsform der Erfindung ist dem Summierplanetengetriebe ein Schaltgetriebe mit zumindest zwei Schaltstufen nachgeschaltet. Mit einem nachgeschalteten Schaltgetriebe, das einen Wechsel der Schaltstufen mit Zugkraftunterbrechnung aufweist, kann auf einfache Weise eine Anpassung der Geschwindigkeitsbereiche erzielt werden.

Besondere Vorteile ergeben sich, wenn das Schaltgetriebe als Planetengetriebe ausgebildet ist, dessen Sonnenrad mit dem Planetenträger des Summierplanetengetriebes trieblich verbunden ist und dessen Planetenträger mit dem Radantrieb oder Achsantrieb trieblich verbunden ist, wobei dem Hohlrad des Planetengetriebes eine Hohlradkupplung zum Festsetzen des Hohlrades zugeordnet ist und eine Verbindungskupplung vorgesehen ist, mittels der das Sonnenrad mit dem Planetenträger verbindbar oder trennbar ist, wobei in einer Untersetzungsstellung als erster Schaltstufe des Schaltgetriebes die Hohlradkupplung geschlossen und die Verbindungskupplung geöffnet ist und in einer Durchtriebsstellung als zweiter Schaltstufe des Schaltgetriebes die Hohlradkupplung geöffnet und die Verbindungskupplung geschlossen ist. Das als Schaltgetriebe ausgebildete Planetengetriebe weist somit einen identischen Aufbau wie das Summierplanetengetriebe auf, wodurch der Bauaufwand verringert wird.

Hinsichtlich eines geringen Bauraumbedarf und eines günstigen Bauaufwandes ergeben sich Vorteile, wenn der Hydromotor und das Summierplanetengetriebe koaxial zu der Verstellpumpe angeordnet sind, wobei der Hydromotor zwischen der Verstellpumpe und dem Summierplanetengetriebe angeordnet ist. Diese koaxiale Anordnung des Hydromotors direkt hinter der Verstellpumpe ermöglicht es, die Verstellpumpe und den Hydromotor des stufenlosen Getriebes als Kompaktgetriebe auszuführen. Das Summierplanetengetriebe ist direkt hinter dem Hydromotor angeordnet. Mit einer derartigen koaxialen Anordnung der Verstellpumpe, des Hydromotors und des Summierplanetengetriebes kann weiterhin ein geringer Bauraum des Leistungsverzweigungsgetriebes in radialer Richtung erzielt werden.

Bei einer derartigen koaxialen Anordnung des Hydromotors zwischen der Verstellpumpe und dem Summierplanetengetriebe ist mit besonderem Vorteil die Triebwelle des Hydromotors als Hohlwelle ausgebildet, durch die sich die Durchtriebswelle des Antriebsmotors erstreckt. Die Durchtriebswelle des Antriebsmotors kann somit auf einfache Weise durch die Hohlwelle des Hydromotors zu dem hinter dem Hydromotor angeordneten Summierplanetengetriebe hindurchgeführt werden. Die Durchtriebswelle des Antriebsmotors kann hierdurch bei dem erfindungsgemäßen Leistungsverzweigungsgetriebe als Vollwelle ausgebildet werden, die es ermöglicht, über den mechanischen Zweig von dem Antriebsmotor ein hohes Drehmoment auf das Summierplanetengetriebe zu übertragen.

Mit besonderem Vorteil ist die Verstellpumpe als beidseitig verstellbare Verstellpumpe ausgebildet. Hierdurch wird es auf einfache Weise ermöglicht, den im geschlossenen Kreislauf an die Verstellpumpe angeschlossenen Hydromotor in beide Drehrichtungen zu betreiben, so dass in der Betriebsart mit leistungsverzweigter Leistungsübertragung das von dem Hydromotor angetriebenen Antriebselements des Summierplanetengetriebes in beide Drehrichtungen für den gewünschten Fahrgeschwindigkeitsbereich betreibbar ist und in der Betriebsart mit rein hydrostatischer Leistungsübertragung durch die Drehrichtungsumkehr des Hydromotors eine Rückwärtsfahrt und Vorwärtsfahrt des Fahrzeugs erzielt werden kann.

Der Hydromotor kann als im Schluckvolumen fester Konstantmotor ausgebildet sein.

Alternativ kann der Hydromotor als im Schluckvolumen verstellbarer Verstellmotor ausgebildet sein. Hierdurch wird es auf einfache Weise ermöglicht, den Drehzahlbereich des von dem Hydromotor angetriebenen Antriebselements des Summierplanetengetriebes nach oben hinsichtlich höherer Fahrgeschwindigkeiten des Fahrzeugs zu verschieben, insbesondere bei der Betriebsart mit rein hydrostatischer Leistungsübertragung.

Sofern die Verstellpumpe und der Hydromotor bei einer koaxialen Anordnung als Kompaktgetriebe in einer koaxialen Back-to-Back-Bauweise ausgeführt sind, ergeben sich weiter Vorteile hinsichtlich des Bauaufwandes und des Bauraumbedarfs. Bei einer Back-to-Back-Bauweise der Verstellpumpe und des Hydromotors kann eine gemeinsame Steuerbodenaufnahme für die Verstellpumpe und den Hydromotor verwendet werden, in dem die Druckmittelleitungen zwischen der Verstellpumpe und dem Hydromotor ausgeführt sind.

Weitere Vorteile und Einzelheiten der Erfindung werden anhand der in den schematischen Figuren dargestellten Ausführungsbeispiele näher erläutert. Hierbei zeigt
- Figur 1: eine erste Ausführungsform eines erfindungsgemäßen Leistungsverzweigungsgetriebes,
- Figur 2: eine Weiterbildung der Figur 1,
- Figur 3: eine zweite Ausführungsform eines erfindungsgemäßen Leistungsverzweigungsgetriebes,
- Figur 4: eine dritte Ausführungsform eines erfindungsgemäßen Leistungsverzweigungsgetriebes,
- Figur 5: eine Weiterbildung der Figur 4,
- Figur 6: ein Geschwindigkeitsdiagramm des erfindungsgemäßen Leistungsverzweigungsgetriebes und
- Figur 7: ein Zugkraftdiagramm des erfindungsgemäßen Leistungsverzweigungsgetriebes.

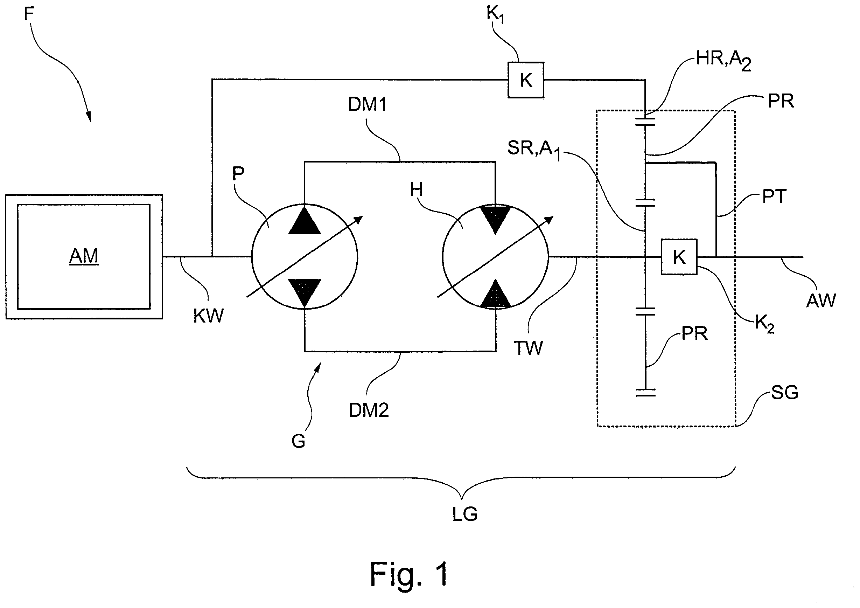

In der Figur 1 ist ein Fahrantrieb F eines Fahrzeugs mit einem erfindungsgemäßen Leistungsverzweigungsgetriebe LG dargestellt.

Das Leistungsverzweigungsgetriebe LG ist von einem stufenlosen hydrostatischen Getriebe G und einem Summierplanetengetriebe SG gebildet. Das hydrostatische Getriebe G weist eine im Fördervolumen verstellbare Verstellpumpe P und einen von der Verstellpumpe P in beide Drehrichtungen antreibbaren Hydromotor H auf.

Der Hydromotor H ist im geschlossenen Kreislauf mittels Druckmittelleitungen DM1 und DM2 mit der Verstellpumpe V verbunden. Die Verstellpumpe P ist ausgehend von einer Nullstellung mit Fördervolumen Null in beide Förderrichtungen verstellbar. Im dargestellten Ausführungsbeispiel ist der Hydromotor als im Schluckvolumen verstellbarer Verstellmotor ausgebildet, der bevorzugt in einer Richtung zwischen einem minimalen Schluckvolumen und einem maximalen Schluckvolumen verstellbar ist. Alternativ kann der Hydromotor H als im Schluckvolumen konstanter Konstantmotor ausgebildet sein.

Die Verstellpumpe P des stufenlosen Getriebes G ist eingangsseitig von einem im dargestellten Ausführungsbeispiel als Verbrennungsmotor ausgebildeten Antriebsmotor AM des Fahrzeugs angetrieben. Die Verstellpumpe P steht hierzu mit der Abtriebswelle KW, beispielsweise der Kurbelwelle des als Verbrennungsmotors ausgebildeten Antriebsmotors AM, in trieblicher Verbindung.

Der Hydromotor H des hydrostatischen Getriebes G weist eine Abtriebswelle TW auf, die mit dem Sonnenrad SR des Summierplanetengetriebes SG trieblich verbunden ist bzw. als Sonnenrad SR ausgebildet ist. Das Sonnenrad SR bildet hierbei ein erstes Antriebselement A1 des Summierplanetengetriebes SG.

Die Abtriebswelle KM des Antriebsmotors AM steht weiterhin erfindungsgemäß unter Zwischenschaltung einer ersten Kupplungseinrichtung K1 mit dem Hohlrad HR des Summierplanetengetriebes SG in Verbindung, wobei das Hohlrad HR ein zweites Antriebselement A2 des Summierplanetengetriebes SG bildet. Die Kupplungseinrichtung K1 weist eine geschlossene Stellung und eine geöffnete Stellung auf, wobei in der geschlossenen Stellung das Hohlrad HR mit der Abtriebswelle KW des Antriebsmotors AM trieblich verbunden ist und in der geöffneten Stellung die triebliche Verbindung getrennt ist und somit das Hohlrad HR frei drehen kann.

Ein bevorzugt mehrere Planetenräder PR, die mit dem Sonnenrad SR und dem Hohlrad HR in Eingriff stehen, tragender Planetenträger PT des Summierplanetengetriebes SG bildet das Abtriebselement des Leistungsverzweigungsgetriebes und ist mit einem in der Figur 1 nicht näher dargestellten Radantrieb oder Achsantrieb mittels einer Abtriebswelle AW trieblich verbunden.

Bei dem erfindungsgemäßen Summierplanetengetriebes SG ist weiterhin eine zweite Kupplungseinrichtung K2 vorgesehen, mittels der das Sonnenrad SR mit dem Planetenträger PT verbindbar ist. Die Kupplungseinrichtung K2 weist eine geschlossene Stellung und eine geöffnete Stellung auf, wobei in der geschlossenen Stellung das Sonnenrad SR mit dem Planetenträger PT trieblich verbunden und somit verblockt ist und in der geöffneten Stellung die triebliche Verbindung zwischen dem Sonnenrad SR und dem Planetenträger PT getrennt ist und somit das Sonnenrad SR und der Planetenträger PT unabhängig voneinander drehen können.

In der Figur 1 ist das von dem hydrostatischen Getriebe G und dem Summierplanetengetriebe SG gebildete Leistungsverzweigungsgetriebe LG koaxial zur der Abtriebswelle KW des Antriebsmotors AM angeordnet. Weiterhin sind die Verstellpumpe P, der Hydromotor H und das Summierplanetengetriebe SG koaxial angeordnet, wobei der Hydromotor H zwischen der Vertellpumpe P und dem Summierplanetengetriebe SG und somit in axialer Richtung hinter, bevorzugt unmittelbar hinter, der Verstellpumpe P angeordnet ist. Die Verstellpumpe P ist axialer Richtung hinter der Antriebsmaschine AM angeordnet.

Die Verstellpumpe V und der Hydromotor H sind bevorzugt jeweils als Axialkolbenmaschinen in Schrägscheibenbauweise ausgebildet. Die Verstellpumpe P und der Motor H sind weiterhin bevorzugt als Kompaktgetriebe in einer Back-to-Back-Anordnung unmittelbar aneinandergebaut, in der die Druckmitteleinlässe und die Druckmittelauslässe der Verstellpumpe P und des Hydromotors H aneinander angrenzend angeordnet sind. Hierdurch können die Verstellpumpe P und der Hydromotor H mit einer gemeinsamen Steuerbodenaufnahme versehen werden, die kurze Druckmittelverbindung ermöglicht. Weiterhin ermöglicht eine Back-to-Back-Anordnung der Verstellpumpe V und des Hydromotors H eine kompakte Bauweise des hydrostatischen Getriebes G in axialer Richtung, wodurch geringe Abmessungen des erfindungsgemäßen Leistungsverzweigungsgetriebes LG in axialer Richtung erzielt werden.

Mit den Kupplungseinrichtungen K1, K2 kann erfindungsgemäß das Summierplanetengetriebe SG an einem Schaltpunkt SP zwischen einer Betriebsart mit leistungsverzweigter Leistungsübertragung und einer weiteren Betriebsart mit einer reinen hydrostatischen Leistungsübertragung ohne Zugkraftunterbrechung umgeschaltet werden. Ebenso ist es mit den Kupplungseinrichtungen K1, K2 möglich, an dem Schaltpunkt SP zwischen einer Betriebsart mit rein mechanischer Leistungsübertragung und einer weiteren Betriebsart mit einer reinen hydrostatischen Leistungsübertragung bzw. einer leistungsverzweigten Energieübertragung ohne Zugkraftunterbrechung umzuschalten.

In der Betriebsart mit leistungsverzweigter Leistungsübertragung ist die erste Kupplungseinrichtung K1 geschlossen, wodurch der Antriebsmotor AM über die Abtriebwelle KW das Hohlrad HR antreibt, und ist die zweite Kupplungseinrichtung K2 geöffnet, so dass der Hydromotor H das Sonnenrad SR antreibt und an dem Planetenträger PT die Leistungszusammenführung des mechanischen Getriebezweigs und des hydrostatischen Getriebezweigs erfolgt.

In der weiteren Betriebsart mit einer reinen hydrostatischen Leistungsübertragung ist die erste Kupplungseinrichtung K1 geöffnet, wodurch das Hohlrad HR frei drehen kann, und ist die zweite Kupplungseinrichtung K2 geschlossen. Bei geschlossener Kupplungseinrichtung K2 ist das von dem Hydromotor H angetriebene Sonnenrad SR mit dem Planetenträger PT verblockt, so dass sich das Summierplanetengetriebe SG in einer Durchtriebsstellung befindet, in der die Leistung rein hydrostatisch übertragen wird.

In der Betriebsart mit rein mechanischer Leistungsübertragung sind die erste Kupplungseinrichtung K1 und die zweite Kupplungseinrichtung K2 geschlossen. Das hydrostatische Getriebe G ist derart betrieben, dass das Sonnenrad SR die Drehzahl der Abtriebswelle AW aufweist und von dem hydrostatischen Getriebe G keine Leistung übertragen wird.

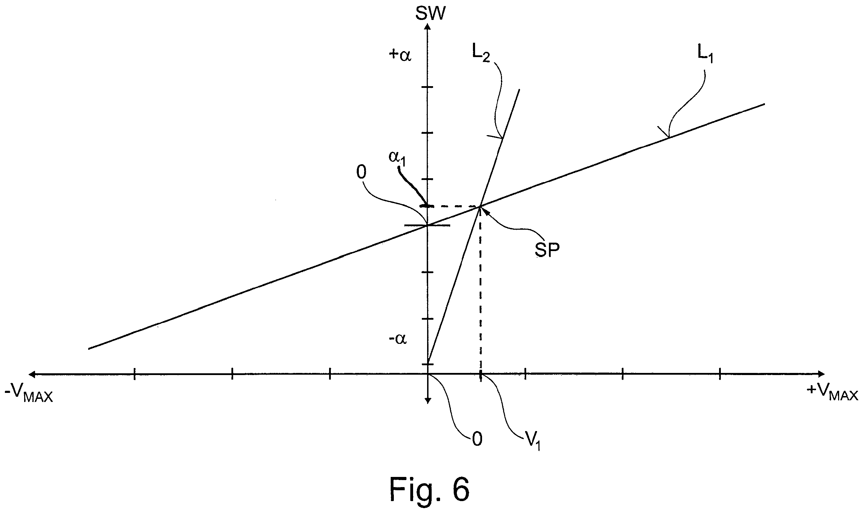

Anhand der Figur 6 soll der Schaltvorgang des erfindungsgemäßen Summierplanetengetriebes SG näher erläutert werden. In der Figur 6 ist hierbei ein Geschwindigkeitsdiagramm des Fahrzeugs dargestellt, wobei auf der Abszisse die Fahrgeschwindigkeit v und auf der Ordinate die Verstellung SW der Verstellpumpe P dargestellt, die ausgehend von einer Nullstellung in zwei Stellrichtungen verstellbar ist. Bei einer als Axialkolbenmaschine in Schrägscheibenbauweise ausgebildeten Verstellpumpe P entspricht die Verstellung SW dem Schwenkwinkel α einer ausgehend von der Nullstellung mit Schwenkwinkel α=0 in beide Schwenkrichtungen +α und -α ausschwenkbaren und huberzeugenden Schrägscheibe.

Die Figur 6 zeigt eine Linie L1 für einen rein hydrostatischen Fahrbetrieb. Die Linie L2 zeigt einen leistungsverzweigten Fahrbetrieb.

Im rein hydrostatischen Fahrbetrieb (Linie L1) befindet sich bei Fahrgeschwindigkeit Null und somit bei stehendem Fahrzeug die Verstellpumpe P in der Nullstellung mit Schwenkwinkel α=0 und somit Fördermenge Null. Durch Verstellen der Verstellpumpe P in negativer Richtung -a kann eine Rückwärtsfahrt -v erzielt werden, wobei die Fahrgeschwindigkeit mit zunehmendem Schwenkwinkel -a zunimmt. Entsprechend kann durch Verstellen der Verstellpumpe P in positiver Richtung +α eine Vorwärtsfahrt +v erzielt werden, wobei die Fahrgeschwindigkeit v mit zunehmendem Schwenkwinkel +α zunimmt.

Im leistungsverzweigten Fahrbetrieb (Linie L2), bei dem in dem Summierplanetengetriebe SG die Drehzahlen aus dem mechanischen Zweig und dem hydrostatischen Zweig summiert werden, befindet sich im Fahrzeugstillstand bei Fahrgeschwindigkeit Null die Verstellpumpe P im Bereich des maximalen negativen Schwenkwinkels -α. Da das Hohlrad HR bei einer Leistungsverzweigung von dem Antriebsmotor AM angetrieben ist, muss das Sonnenrad SR von dem Hydromotor H mit hoher Drehzahl in Gegenrichtung angetrieben werden, um an dem Planetenträger PT die Abtriebsdrehzahl Null für den Fahrzeugstillstand zu erzielen. Zum Beschleunigen des Fahrzeugs in die Vorwärtsfahrt wird der Schwenkwinkel der Verstellpumpe P verringert und über den Schwenkwinkel α=0 in die Gegenrichtung bis zum maximalen positiven Schwenkwinkel +α ausgeschwenkt.

In dem Schnittpunkt der beiden Linien L1 und L2 gibt es für beide Betriebszustände (leistungsverzweigtes Fahren / rein hydrostatisches Fahren) für jede Drehzahl des Antriebsmotors AM einen gemeinsamen Betriebspunkt mit Drehzahlgleichheit des Hohlrades HR, des Planetenträgers PT und des Sonnenrades SR und somit einen Schaltpunkt SP, an dem stufenlos und ohne Zugkraftunterbrechung zwischen der Betriebsart mit rein hydrostatischer Leistungsübertragung und somit rein hydrostatischem Fahren und der Betriebsart mit leistungsverzweigter Leistungsübertragung und somit leistungsverzweigtem Fahren und ohne Veränderung des Schwenkwinkels α1 umgeschaltet werden kann.

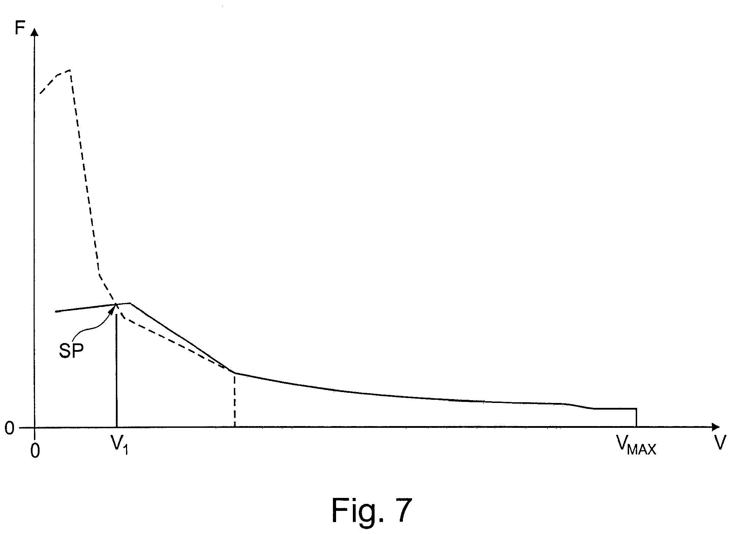

Die Betriebsart leistungsverzweigtes Fahren ist hierbei - wie in Verbindung mit der Figur 7 näher dargestellt ist - als Arbeitsgang in einem niedrigen Fahrgeschwindigkeitsbereich zwischen dem Fahrzeugstillstand und der Fahrgeschwindigkeit v1 ausgebildet. Die Betriebsart hydrostatisches Fahren ist als Transportgang in einem höheren Fahrgeschwindigkeitsbereich zwischen der Grenzfahrgeschwindigkeit v1 und der maximalen Fahrgeschwindigkeit vₘₐₓ ausgeführt.

In der Figur 7 ist ein Zugkraftdiagramm des erfindungsgemäßen Leistungsverzweigungsgetriebes LG dargestellt, in der auf der Abszisse die Fahrgeschwindigkeit v und auf der Ordinate die Zugkraft F aufgetragen sind. In der gestrichelten Linie ist hierbei die Zugkraft in der Betriebsart mit leistungsverzweigter Leistungsübertragung und mit durchgezogener Linie die Zugkraft in der Betriebsart mit hydrostatischer Leistungsübertragung dargestellt. In dem Arbeitsgang unterhalb des Schaltpunktes SP und der Grenzfahrgeschwindigkeit v1 können mit dem erfindungsgemäßen Leistungsverzweigungsgetriebe in der Betriebsart mit leistungsverzweigter Leistungsübertragung hohe Zugkräfte erzielt werden. In dem Transportgang oberhalb des Schaltpunktes SP und der Grenzfahrgeschwindigkeit v1 können mit dem erfindungsgemäßen Leistungsverzweigungsgetriebe in der Betriebsart mit hydrostatischer Leistungsübertragung durch die stufenlose Geschwindigkeitsanpassung des hydrostatischen Getriebes hohe Fahrgeschwindigkeiten erzielt werden, in denen geringe Zugkräfte erforderlich sind.

Bei der Erfindung befindet sich in dem Arbeitsgang das Leistungsverzweigungsgetriebe LG in der Betriebsart mit leistungsverzweigter Leistungsübertragung, in dem die Kupplungseinrichtung K1 geschlossen und die Kupplungseinrichtung K2 geöffnet ist. Ausgehend von dem Fahrzeugstillstand kann hierbei durch Verringerung des Schwenkwinkels α der Verstellpumpe P bei einer gegebenen Drehzahl des Antriebsmotors AM bis zu der Geschwindigkeit v1 beschleunigt werden, in der bei dem Schwenkwinkel a1 das Sonnenrad SR, der Planetenträger PT und das Hohlrades HR mit gleicher Drehzahl, d.h. der Drehzahl des Antriebsmotors AM, drehen. An diesem Schaltpunkt SP wird durch Öffnen der ersten Kupplungseinrichtung K1 und durch Schließen der zweiten Kupplungseinrichtung K2 in der Betriebsart mit hydrostatischer Leistungsübertragung umgeschaltet. Das Umschalten erfolgt somit stufenlos und ohne Zugkraftunterbrechung und ohne Veränderung des Schwenkwinkels α1 der Verstellpumpe P. Durch Erhöhen des Schwenkwinkels α der Verstellpumpe P und bei einem Verstellmotor durch Verringerung des Schluckvolumens des Hydromotors H kann dann in dem Transportgang bis zur maximalen Fahrgeschwindigkeit vₘₐₓ rein hydrostatisch gefahren werden.

Entsprechend kann ausgehend von der Betriebsart mit hydrostatischer Leistungsübertragung im Transportgang bei Erreichen des Schwenkwinkels α1, an dem der mit dem Sonnenrad SR bei geschlossener Kupplung K2 verblockte Planetenträger PT und das Hohlrad HR mit der Drehzahl des Antriebsmotors AM drehen, durch Öffnen der Kupplungseinrichtung K2 und Schließen der Kupplungseinrichtung K1 stufenlos und ohne Unterbrechung der Zugkraft und ohne Veränderung des Schwenkwinkels a1 der Verstellpumpe P in den Arbeitsgang und die Betriebsart mit leitungsverzweigter Leistungsübertragung geschaltet werden.

Auf dieselbe Weise kann beim dem Getriebe der Figur 1 in dem Arbeitsgang eine rein mechanische Leistungsübertragung erfolgen und an dem Schaltpunkt SP ohne Zugkraftunterbrechung in den Transportgang mit rein hydrostatischer Leistungsübertragung gewechselt werden.

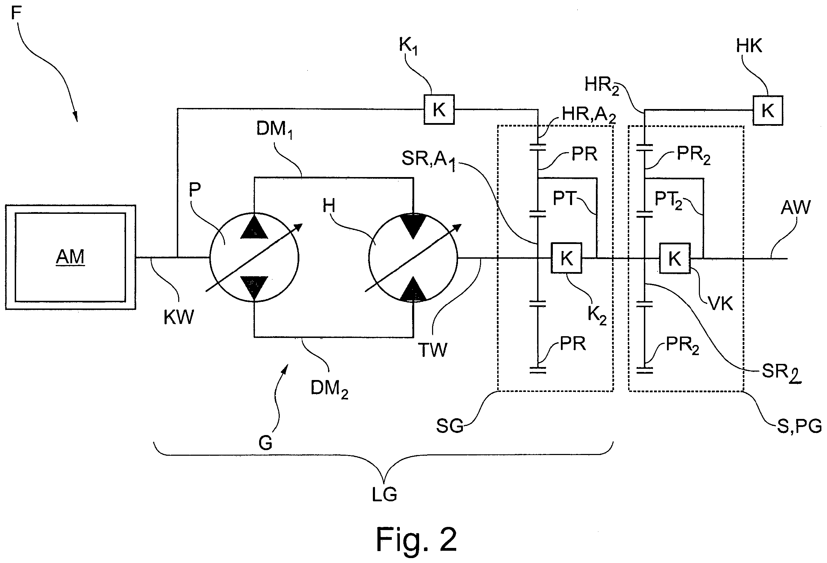

In der Figur 2 ist eine Weiterbildung der Figur 1 dargestellt, wobei dem Summierplanetengetriebe SG ein Schaltgetriebe S mit zumindest zwei Schaltstufen nachgeschaltet ist.

Das Schaltgetriebe S ist als Planetengetriebe PG ausgebildet, dessen Sonnenrad SR2 mit dem Planetenträger PT des Summierplanetengetriebes SG trieblich verbunden ist.

Ein Planetenräder PR2, die mit dem Sonnenrad SR2 und dem Hohlrad HR2 in Eingriff stehen, tragender Planetenträger PT2 des Planetengetriebes PG ist über die Abtriebswelle AW mit dem Radantrieb bzw. Achsantrieb des Fahrzeugs trieblich verbunden. Einem Hohlrad HR2 des Planetengetriebes PG ist eine Hohlradkupplung HK zum Festsetzen des Hohlrades HR2 zugeordnet. Das Planetengetriebe PG ist weiterhin mit einer Verbindungskupplung VK versehen, mittels der das Sonnenrad SR2 mit dem Planetenträger PT2 verbindbar oder trennbar ist.

Bei geschlossener Hohlradkupplung HK und somit feststehendem Hohlrad HR2 und geöffneter Verbindungskupplung VK kann eine Untersetzungsstellung als erste Schaltstufe des Schaltgetriebes S erzielt werden. Bei geöffneter Hohlradkupplung HK und geschlossener Verbindungskupplung VK, wobei der Planetenträger PT2 mit dem Sonnenrad SR2 verblockt ist, wird eine Durchtriebsstellung als zweite Schaltstufe des Schaltgetriebes S ermöglicht.

Das Schaltgetriebe S ermöglicht bevorzugt einen Schaltvorgang mit einer Zugkraftunterbrechung.

Wie aus der Figur 2 ersichtlich ist, weisen bevorzugt das Summierplanetengetriebe SG und das als Planetengetriebe PG ausgebildete Schaltgetriebe S einen identischen Aufbau auf, wodurch ein modularer Getriebebaukasten erzielt wird.

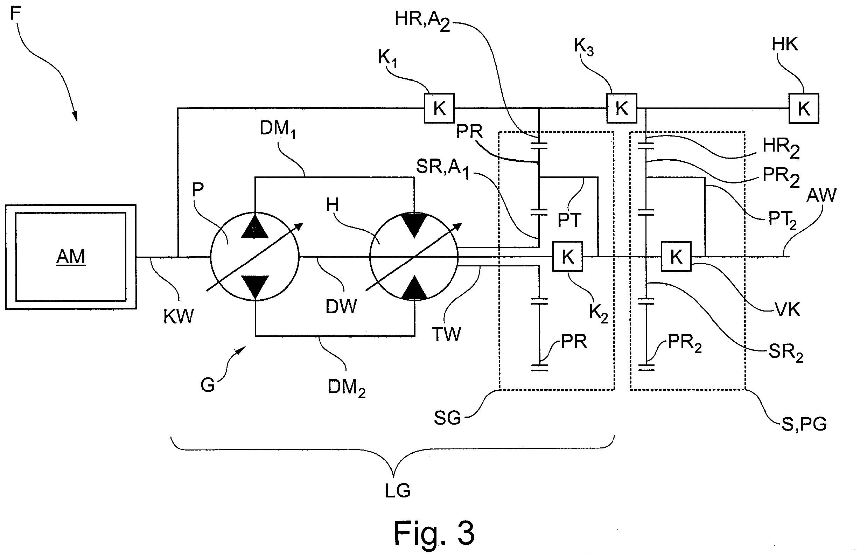

In der Figur 3 ist eine alternative Ausführungsform eines erfindungsgemäßen Leistungsverzweigungsgetriebes LG dargestellt. Gleiche Bauteile sind hierbei mit gleichen Bezugsziffern versehen.

Bei dem Leistungsverzweigungsgetriebe LG der Figur 3 weist der Hydromotor H eine als Hohlwelle ausgebildete Abtriebswelle TW auf, die mit dem Sonnenrad SR als ersten Antriebselement A1 des Summierplanetengetriebes LG in trieblicher Verbindung steht bzw. als Sonnenrad SR ausgebildet ist. Der Antriebsmotor AM ist mittels der ersten Kupplungseinrichtung K1 mit dem Hohlrad HR als zweiten Antriebselement A2 des Summierplanetengetriebe LG in triebliche Verbindung bringbar. Der Planetenträger PT des Summierplanetengetriebe LG bildet das Abtriebselement.

Bei der Figur 3 ist eine mit dem Antriebsmotor AM und somit der Abtriebswelle KW des Antriebsmotors AM trieblich verbundene Durchtriebswelle DW vorgesehen, die sich durch die als Hohlwelle ausgebildete Triebwelle TW der Hydromotors H erstreckt und mit dem Planetenträger PT trieblich verbindbar ist. Hierzu ist die zweite Kupplungseinrichtung K2 vorgesehen ist, mittels der die Durchtriebswelle DW mit dem Planetenträger PT verbindbar oder trennbar ist.

Mit den Kupplungseinrichtungen K1, K2 kann das erfindungsgemäße Summierplanetengetriebe SG der Figur 3 an dem Schaltpunkt SP zwischen einer Betriebsart mit leistungsverzweigter Leistungsübertragung und einer weiteren Betriebsart mit einer reinen mechanischen Leistungsübertragung ohne Zugkraftunterbrechung umgeschaltet werden.

In der Betriebsart mit leistungsverzweigter Leistungsübertragung ist die erste Kupplungseinrichtung K1 geschlossen und die zweite Kupplungseinrichtung K2 geöffnet. In der weiteren Betriebsart mit einer reinen mechanischen Leistungsübertragung ist die erste Kupplungseinrichtung K1 geöffnet und die zweite Kupplungseinrichtung K2 geschlossen. Bei geschlossener Kupplungseinrichtung K2 ist die von dem Antriebsmotor AM angetriebenen Durchtriebswelle DW mit dem Planetenträger PT verblockt, so dass sich das Summierplanetengetriebe SG in einer Durchtriebsstellung befindet, in der die Leistung rein mechanisch übertragen wird.

Um bei der Figur 3 weiterhin eine Betriebsart mit einer rein hydrostatischen Leistungsübertragung zu erzielen, ist eine weitere Kupplungseinrichtung K3 vorgesehen, mittels der das Hohlrad HR des Summierplanetengetriebes SG im Stillstand festsetzbar ist. Bei geschlossener weitere Kupplungseinrichtung K3, bei geöffneter erster Kupplungseinrichtung K1 und geöffneter zweiter Kupplungseinrichtung K2 ist hierdurch eine zusätzlicher Betriebsart mit rein hydrostatischer Leistungsübertragung erzielbar, in den an dem Schaltpunkt SP ohne Zugkraftunterbrechung umgeschaltet werden kann. In der Figur 3 verbindet hierzu die Kupplungseinrichtung K3 das Hohlrad HR des Summierplanetengetriebes SG mit dem Hohlrad HR2 des Schaltgetriebes S, so dass bei geschlossener Kupplungseinrichtung K3 und geschlossener Hohlradkupplung HK das Hohlrad HR festsetzbar ist.

In der Figur 3 ist dem Summierplanetengetriebe SG ein Schaltgetriebe S gemäß der Figur 2 nachgeschaltet. Das nachgeschaltete Schaltgetriebe S kann jedoch alternativ auch weggelassen werden.

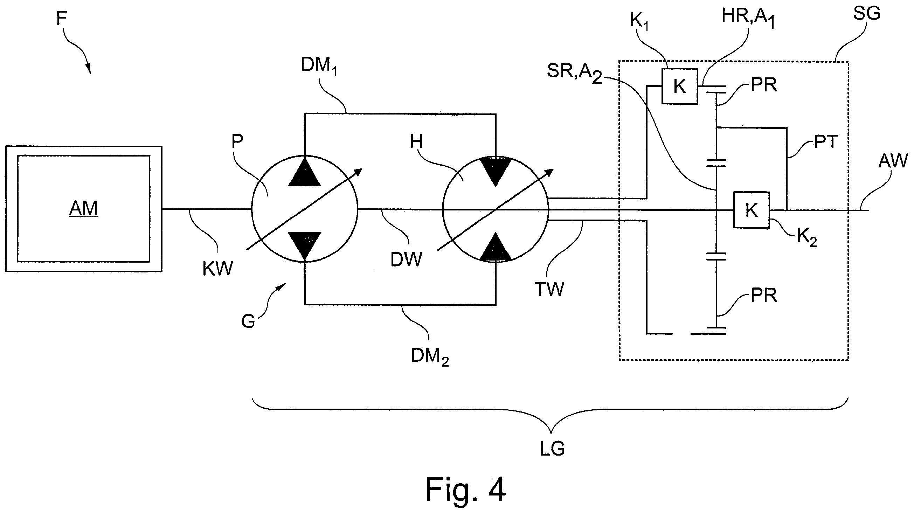

In der Figur 4 ist eine alternative Ausführungsform eines erfindungsgemäßen Leistungsverzweigungsgetriebes LG dargestellt. Gleiche Bauteile sind hierbei mit gleichen Bezugsziffern versehen.

Bei dem Leistungsverzweigungsgetriebe der Figur 4 ist der Hydromotor H unter Zwischenschaltung der ersten Kupplungseinrichtung K1 mit dem Hohlrad HR als ersten Antriebselement A1 des Summierplanetengetriebes SG in Verbindung bringbar.

Bei der Figur 4 weist der Hydromotor H eine als Hohlwelle ausgebildete Abtriebswelle TW, die mittels der ersten Kupplungseinrichtung K1 mit dem Hohlrad HR verbindbar ist.

Bei der Figur 4 ist eine mit dem Antriebsmotor AM und somit der Abtriebswelle KW des Antriebsmotors AM trieblich verbundene Durchtriebswelle DW vorgesehen, die sich durch die als Hohlwelle ausgebildete Triebwelle TW der Hydromotors H erstreckt und mit dem Sonnenrad SR als zweiten Antriebselement A2 des Summierplanetengetriebes SG in trieblicher Verbindung steht. Der Planetenträger PT des Summierplanetengetriebes SG bildet das Abtriebselement.

Das Summierplanetengetriebes SP der Figur 4 ist weiterhin mit der zweiten Kupplungseinrichtung K2 vorgesehen, mittels der das Sonnenrad SR mit dem Planetenträger PT verbindbar ist.

Mit den Kupplungseinrichtungen K1, K2 kann erfindungsgemäß das Summierplanetengetriebe SG an dem Schaltpunkt SP zwischen einer Betriebsart mit leistungsverzweigter Leistungsübertragung und einer weiteren Betriebsart mit einer reinen mechanischen Leistungsübertragung ohne Zugkraftunterbrechung umgeschaltet werden.

In der Betriebsart mit leistungsverzweigter Leistungsübertragung ist die erste Kupplungseinrichtung K1 geschlossen, wodurch der Hydromotor H das Hohlrad HR antreibt, und ist die zweite Kupplungseinrichtung K2 geöffnet, so dass der Antriebsmotor AM mittels der Durchtriebswelle DW das Sonnenrad SR antreibt und an dem Planetenträger PT die Leistungszusammenführung des mechanischen Getriebezweigs und des hydrostatischen Getriebezweigs erfolgt. In der weiteren Betriebsart mit einer reinen mechanischen Leistungsübertragung ist die erste Kupplungseinrichtung K1 geöffnet, wodurch das Hohlrad HR frei drehen kann, und ist die zweite Kupplungseinrichtung K2 geschlossen. Bei geschlossener Kupplungseinrichtung K2 ist das von dem Antriebsmotor AM angetriebene Sonnenrad SR mit dem Planetenträger PT verblockt, so dass sich das Summierplanetengetriebe SG in einer Durchtriebsstellung befindet, in der die Leistung rein mechanisch übertragen wird.

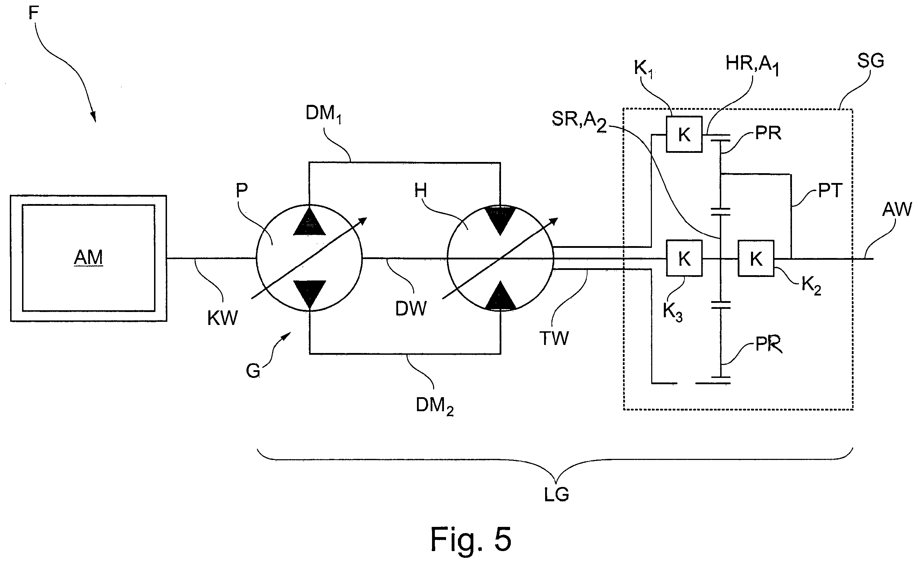

Die Figur 5 zeigt eine Weiterbildung der Figur 4, wobei gleiche Bauteile mit gleichen Bezugsziffern versehen sind.

Bei der Figur 5 ist eine weitere Kupplungseinrichtung K3 vorgesehen, mittels der das Sonnenrad SR mit der Durchtriebswelle DW verbindbar oder trennbar ist.

Die weitere Kupplungseinrichtung K3 weist eine geschlossene Stellung und eine geöffnete Stellung auf, wobei in der geschlossenen Stellung die Durchtriebswelle DW mit dem Sonnenrad SR verbunden ist und in der geöffneten Stellung die Verbindung der Durchtriebswelle DW mit dem Sonnenrade SR unterbrochen ist.

In der Betriebsart mit leistungsverzweigter Leistungsübertragung sind die erste Kupplungseinrichtung K1 und die weitere Kupplungseinrichtung K3 geschlossen, und ist die zweite Kupplungseinrichtung K2 geöffnet, so dass der Hydromotor H das Hohlrad HR und der Antriebsmotor AM mittels der Durchtriebswelle DW das Sonnenrad SR antreibt und an dem Planetenträger PT die Leistungszusammenführung des mechanischen Getriebezweigs und des hydrostatischen Getriebezweigs erfolgt. In der weiteren Betriebsart mit einer reinen mechanischen Leistungsübertragung ist die erste Kupplungseinrichtung K1 geöffnet, wodurch das Hohlrad HR frei drehen kann, und ist die zweite Kupplungseinrichtung K2 sowie die weitere Kupplungseinrichtung K3 geschlossen.

Bei geschlossener erster Kupplungseinrichtung K1, bei geschlossener zweiter Kupplungseinrichtung K2 und bei geöffneter weiterer Kupplungseinrichtung K3 ist eine zusätzlicher Betriebsart mit einer rein hydrostatischen Leistungsübertragung erzielbar, in den an dem Schaltpunkt SP ohne Zugkraftunterbrechung umgeschaltet werden kann.

Bei den Figuren 4 und 5 kann analog zu den Figuren 2 und 3 dem Summierplanetengetriebe SG ein Schaltgetriebe G nachgeschaltet werden.

Das erfindungsgemäße Leistungsverzweigungsgetriebe LG der Figuren 1 bis 5 ermöglicht in dem Arbeitsgang bei der Betriebsart mit leistungsverzweigter Energieübertragung bzw. rein mechanischer Leistungsübertragung eine Effizienzverbesserung und in dem Transportgang bei der Betriebsart mit einer bevorzugt rein hydrostatischen Leistungsübertragung eine stufenlose Fahrgeschwindigkeitsänderung mit hohem Fahrkomfort. Das hydrostatische Getriebe G des erfindungsgemäßen Leistungsverzweigungsgetriebe LG weist hierbei einen einfachen Aufbau mit geringem Herstellaufwand auf. An dem Schaltpunkt SP kann ein einfacher Schaltvorgang zwischen den Betriebsarten ohne Veränderung des Fördervolumens und somit ohne Veränderung des Schwenkwinkels α der Verstellpumpe P erzielt werden. Das erfindungsgemäße Leistungsverzweigungsgetriebe LG ermöglicht auf einfache Weise eine Kombination aus leistungsverzweigtem Fahren, hydrostatischem Fahren und mechanischem Fahren. In Verbindung mit einem Hydromotor H mit einer als Hohlwelle ausgebildeten Abtriebswelle TW, durch die sich die Durchtriebswelle DW des Antriebsmotors AM erstreckt, wird auf einfache Weise ein Leistungsverzweigungsgetriebe LG mit drei verschiedenen Betriebsarten ermöglicht, das neben der leistungsverzweigten Leistungsübertragung eine rein hydrostatische Leistungsübertragung und eine rein mechanische Leistungsübertragung ermöglicht.

## Patentansprüche

1. Leistungsverzweigungsgetriebe (LG) eines Fahrantrieb (F) eines Fahrzeugs, mit einem hydrostatischen stufenlosen Getriebe (G) und einem Summierplanetengetriebe (SG), das als einfaches Planetengetriebe ausgebildet ist, das aus einem Sonnenrad (SR), einem Hohlrad (HR) und einem mehrere Planetenräder (PR) tragenden Planetenträger (PT) besteht, wobei die Planetenräder (PR) mit dem Sonnenrad (SR) und dem Hohlrad (HR) in Eingriff stehen, wobei das Summierplanetengetriebe (SG) antriebsseitig mit einem Antriebsmotor (AM) des Fahrzeugs, insbesondere einem Verbrennungsmotor, und dem hydrostatischen Getriebe (G) in Verbindung bringbar ist und das hydrostatische Getriebe (G) eine im Fördervolumen verstellbare Verstellpumpe (P) und einen Hydromotor (H) umfasst, wobei der Hydromotor (H) im geschlossenen Kreislauf mittels Druckmittelleitungen (DM1, DM2) mit der Verstellpumpe (P) verbunden ist, wobei die Verstellpumpe (P) von dem Antriebsmotor (AM) angetrieben ist, der Hydromotor (H) zum Antrieb mit einem ersten Antriebselement (A1) des Summierplanetengetriebes (SG) in trieblicher Verbindung bringbar ist, der Antriebsmotor (AM) zum Antrieb mit einem zweiten Antriebselement (A2) des Summierplanetengetriebes (SG) in trieblicher Verbindung bringbar ist und ein Abtriebselement des Summierplanetengetriebes (SG) mit einem Radantrieb oder Achsantrieb des Fahrzeugs trieblich in Verbindung steht, **dadurch gekennzeichnet, dass** das Summierplanetengetriebe (SG) eine Betriebsart mit leistungsverzweigter Energieübertragung, eine Betriebsart mit rein hydrostatischer Energieübertragung und eine Betriebsart mit rein mechanischer Leistungsübertragung aufweist,
wobei das Summierplanetengetriebe (SG) mit Kupplungseinrichtungen (K1, K2) versehen ist, mit denen das Summierplanetengetriebe (SG) während der Fahrt an einem Schaltpunkt (SP) zwischen der Betriebsart mit leistungsverzweigter Leistungsübertragung und einer weiteren Betriebsart mit einer reinen hydrostatischen Leistungsübertragung oder einer reinen mechanischen Leistungsübertragung ohne Zugkraftunterbrechung umschaltbar ist
oder
wobei das Summierplanetengetriebe (SG) mit Kupplungseinrichtungen (K1, K2) versehen ist, mit denen das Summierplanetengetriebe (SG) während der Fahrt an einem Schaltpunkt (SP) zwischen der Betriebsart mit einer reinen mechanischen Leistungsübertragung und einer weiteren Betriebsart mit einer reinen hydrostatischen Leistungsübertragung oder einer leistungsverzweigten Leistungsübertragung ohne Zugkraftunterbrechung umschaltbar ist.

2. Leistungsverzweigungsgetriebe nach Anspruch 1, **dadurch gekennzeichnet, dass** an dem Schaltpunkt (SP) Drehzahlgleichheit des Abtriebselements und der Antriebselemente des Summierplanetengetriebes (SG) herrscht, so dass ohne Korrektur der Getriebeübersetzung des hydrostatischen Getriebes (G) zwischen den Betriebsarten, insbesondere der Betriebsart mit leistungsverzweigter Leistungsübertragung und der weiteren Betriebsart, umgeschaltet werden kann.

3. Leistungsverzweigungsgetriebe nach Anspruch 1 oder 2, **dadurch gekennzeichnet, dass** die Betriebsart mit leistungsverzweigter Leistungsübertragung als Arbeitsgang vom Fahrzeugstillstand bis zu einer Grenzfahrgeschwindigkeit (v1) und die weitere Betriebsart mit einer reinen hydrostatischen Leistungsübertragung oder einer reinen mechanischen Leistungsübertragung als Transportgang zwischen der Grenzfahrgeschwindigkeit (v1) und der maximalen Fahrgeschwindigkeit (vₘₐₓ) ausgeführt ist.

4. Leistungsverzweigungsgetriebe nach Anspruch 1 oder 2, **dadurch gekennzeichnet, dass** die Betriebsart mit reiner mechanischer Leistungsübertragung als Arbeitsgang vom Fahrzeugstillstand bis zu einer Grenzfahrgeschwindigkeit (v1) und die weitere Betriebsart mit einer reinen hydrostatischen Leistungsübertragung oder einer leistungsverzweigten Leistungsübertragung als Transportgang zwischen der Grenzfahrgeschwindigkeit (v1) und der maximalen Fahrgeschwindigkeit (vₘₐₓ) ausgeführt ist.

5. Leistungsverzweigungsgetriebe nach einem der Ansprüche 1 bis 4, **dadurch gekennzeichnet, dass** der Hydromotor (H) mit dem Sonnenrad (SR) als ersten Antriebselement (A1) des Summierplanetengetriebe (SG) in trieblicher Verbindung steht, der Antriebsmotor (AM) mit dem Hohlrad (HR) als zweiten Antriebselement (A2) des Summierplanetengetriebe (SG) in trieblicher Verbindung bringbar ist und der Planetenträger (PT) des Summierplanetengetriebe (SG) das Abtriebselement bildet, wobei eine erste Kupplungseinrichtung (K1) vorgesehen ist, mittels der das Hohlrad (HR) mit dem Antriebsmotor (AM) verbindbar oder trennbar ist, und eine zweite Kupplungseinrichtung (K2) vorgesehen ist, mittels der das Sonnenrad (SR) mit dem Planetenträger (PT) verbindbar oder trennbar ist, wobei in der Betriebsart mit leistungsverzweigter Leistungsübertragung die erste Kupplungseinrichtung (K1) geschlossen und die zweite Kupplungseinrichtung (K2) geöffnet ist, und in der weiteren Betriebsart mit einer reinen hydrostatischen Leistungsübertragung die erste Kupplungseinrichtung (K1) geöffnet und die zweite Kupplungseinrichtung (K2) geschlossen ist.

6. Leistungsverzweigungsgetriebe nach Anspruch 5, **dadurch gekennzeichnet, dass** in der Betriebsart mit reiner mechanischer Leistungsübertragung die erste Kupplungseinrichtung (K1) und die zweite Kupplungseinrichtung (K2) geschlossen sind.

7. Leistungsverzweigungsgetriebe nach einem der Ansprüche 1 bis 4, **dadurch gekennzeichnet, dass** der Hydromotor (H) mit dem Sonnenrad (SR) als ersten Antriebselement (A1) des Summierplanetengetriebes (SG) in trieblicher Verbindung steht, der Antriebsmotor (AM) mit dem Hohlrad (HR) als zweiten Antriebselement (A2) des Summierplanetengetriebe (SG) in trieblicher Verbindung bringbar ist, der Planetenträger (PT) des Summierplanetengetriebe (SG) das Abtriebselement bildet und der Antriebsmotor (AM) mittels einer Durchtriebswelle (DW) mit dem Planetenträger (PT) trieblich verbindbar ist, wobei eine erste Kupplungseinrichtung (K1) vorgesehen ist, mittels der das Hohlrad (HR) mit dem Antriebsmotor (AM) verbindbar oder trennbar ist, und eine zweite Kupplungseinrichtung (K2) vorgesehen ist, mittels der die Durchtriebswelle (DW) mit dem Planetenträger (PT) verbindbar oder trennbar ist, wobei in der Betriebsart mit leistungsverzweigter Leistungsübertragung die erste Kupplungseinrichtung (K1) geschlossen und die zweite Kupplungseinrichtung (K2) geöffnet ist, und in der weiteren Betriebsart mit einer reinen mechanischen Leistungsübertragung die erste Kupplungseinrichtung (K1) geöffnet und die zweite Kupplungseinrichtung (K2) geschlossen ist.

8. Leistungsverzweigungsgetriebe nach Anspruch 7, **dadurch gekennzeichnet, dass** sich in der weiteren Betriebsart mit einer reinen mechanischen Leistungsübertragung die Verstellpumpe (P) in der Nullstellung mit Fördermenge Null befindet.

9. Leistungsverzweigungsgetriebe nach Anspruch 7 oder 8, **dadurch gekennzeichnet, dass** eine weitere Kupplungseinrichtung (K3) vorgesehen ist, mittels der das Hohlrad (HR) im Stillstand festsetzbar ist, wobei bei geschlossener weitere Kupplungseinrichtung (K3), bei geöffneter erster Kupplungseinrichtung (K1) und geöffneter zweiter Kupplungseinrichtung (K2) eine zusätzliche Betriebsart mit rein hydrostatischer Leistungsübertragung erzielbar ist.

10. Leistungsverzweigungsgetriebe nach einem der Ansprüche 1 bis 4, **dadurch gekennzeichnet, dass** der Hydromotor (H) mit dem Hohlrad (HR) als ersten Antriebselement (A1) des Summierplanetengetriebe (SG) in trieblicher Verbindung bringbar ist, der Antriebsmotor (AM) mittels einer Durchtriebswelle (DW) mit dem Sonnenrad (SR) als zweiten Antriebselement (A2) des Summierplanetengetriebe (SG) in trieblicher Verbindung bringbar ist und der Planetenträger (PT) des Summierplanetengetriebe (SG) das Abtriebselement bildet, wobei eine erste Kupplungseinrichtung (K1) vorgesehen ist, mittels der das Hohlrad (HR) mit dem Hydromotor (H) verbindbar oder trennbar ist, und eine zweite Kupplungseinrichtung (K2) vorgesehen ist, mittels der das Sonnenrad (SR) mit dem Planetenträger (PT) verbindbar oder trennbar ist, wobei in der Betriebsart mit leistungsverzweigter Leistungsübertragung die erste Kupplungseinrichtung (K1) geschlossen und die zweite Kupplungseinrichtung (K2) geöffnet ist, und in der weiteren Betriebsart mit einer reinen mechanischen Leistungsübertragung die erste Kupplungseinrichtung (K1) geöffnet und die zweite Kupplungseinrichtung (K2) geschlossen ist.

11. Leistungsverzweigungsgetriebe nach Anspruch 10, **dadurch gekennzeichnet, dass** eine weitere Kupplungseinrichtung (K3) vorgesehen ist, mittels der das Sonnenrad (SR) mit der Durchtriebswelle (DW) verbindbar oder trennbar ist, wobei bei geschlossener erster Kupplungseinrichtung (K1), bei geschlossener zweiter Kupplungseinrichtung (K2) und bei geöffneter weiterer Kupplungseinrichtung (K3) eine zusätzlicher Betriebsart mit rein hydrostatischer Leistungsübertragung erzielbar ist.

12. Leistungsverzweigungsgetriebe nach einem der Ansprüche 1 bis 11, **dadurch gekennzeichnet, dass** dem Summierplanetengetriebe (SG) ein Schaltgetriebe (S) mit zumindest zwei Schaltstufen nachgeschaltet ist.

13. Leistungsverzweigungsgetriebe nach Anspruch 12, **dadurch gekennzeichnet, dass** das Schaltgetriebe (S) als Planetengetriebe (PG) ausgebildet ist, dessen Sonnenrad (SR2) mit dem Planetenträger (PT) des Summierplanetengetriebes (SG) trieblich verbunden ist und dessen Planetenträger (PT2) mit dem Radantrieb oder Achsantrieb trieblich verbunden ist, wobei dem Hohlrad (HR2) des Planetengetriebes (PG) eine Hohlradkupplung (HK) zum Festsetzen des Hohlrades (HR2) zugeordnet ist und eine Verbindungskupplung (VK) vorgesehen ist, mittels der das Sonnenrad (SR2) mit dem Planetenträger (PT2) verbindbar oder trennbar ist, wobei in einer Untersetzungsstellung als erster Schaltstufe des Schaltgetriebes (S) die Hohlradkupplung (HK) geschlossen und die Verbindungskupplung (VK) geöffnet ist und in einer Durchtriebsstellung als zweiter Schaltstufe des Schaltgetriebes (S) die Hohlradkupplung (HK) geöffnet und die Verbindungskupplung (VK) geschlossen ist.

14. Leistungsverzweigungsgetriebe nach einem der Ansprüche 1 bis 13, **dadurch gekennzeichnet, dass** der Hydromotor (H) und das Summierplanetengetriebe (SG) koaxial zu der Verstellpumpe (P) angeordnet sind, wobei der Hydromotor (H) zwischen der Verstellpumpe (P) und dem Summierplanetengetriebe (SG) angeordnet ist.

15. Leistungsverzweigungsgetriebe nach einem der Ansprüche 7 bis 14, **dadurch gekennzeichnet, dass** der Hydromotor (H) eine als Hohlwelle ausgebildete Abtriebswelle (TW) aufweist, durch die sich die Durchtriebswelle (DW) des Antriebsmotors (AM) erstreckt.

16. Leistungsverzweigungsgetriebe nach einem der Ansprüche 1 bis 15, **dadurch gekennzeichnet, dass** die Verstellpumpe (P) als beidseitig verstellbare Verstellpumpe ausgebildet ist.

17. Leistungsverzweigungsgetriebe nach einem der Ansprüche 1 bis 16, **dadurch gekennzeichnet, dass** der Hydromotor (H) als im Schluckvolumen fester Konstantmotor ausgebildet ist.

18. Leistungsverzweigungsgetriebe nach einem der Ansprüche 1 bis 16, **dadurch gekennzeichnet, dass** der Hydromotor (H) als im Schluckvolumen verstellbarer Verstellmotor ausgebildet ist.

19. Leistungsverzweigungsgetriebe nach einem der Ansprüche 1 bis 18, **dadurch gekennzeichnet, dass** die Verstellpumpe (P) und der Hydromotor (H) als Kompaktgetriebe in einer koaxialen Back-to-Back-Bauweise koaxial ausgeführt sind.

## Claims

1. Power-split transmission (LG) of a drive system (F) of a vehicle, having a hydraulic continuously variable transmission (G) and a summing planetary gear mechanism (SG) which is embodied as simple planetary gear mechanism which is composed of a sun gear (SR), a ring gear (HR) and a planetary carrier (PT) which bears a plurality of planetary gears (PR), wherein the planetary gears (PR) are in engagement with the sun gear (SR) and the ring gear (HR), wherein the summing planetary gear mechanism (SG) can be connected on the drive side to a drive engine (AM) of the vehicle, in particular to an internal combustion engine, and to the hydrostatic transmission (G) and the hydrostatic transmission (G) comprises a variable displacement pump (P) whose delivery volume is adjustable and a hydraulic motor (H), wherein the hydraulic motor (H) is connected to the variable displacement pump(P) in the closed circuit by means of pressure medium lines(DM1, DM2), wherein the variable displacement pump(P) is driven by the drive engine (AM), in order to provide drive the hydraulic motor (H) can be placed in drive connection with a first drive element (A1) of the summing planetary gear mechanism (SG), in order to provide drive the drive engine (AM) can be placed in drive connection with a second drive element (A2) of the summing planetary gear mechanism (SG) and an output element of the summing planetary gear mechanism (SG) is in drive connection with a wheel drive or axle drive of the vehicle, **characterized in that** the summing planetary gear mechanism (SG) has an operating mode with power-split energy transmission, an operating mode with purely hydrostatic energy transmission and an operating mode with purely mechanical power transmission,
wherein the summing planetary gear mechanism (SG) is provided with clutch devices (K1, K2) with which the summing planetary gear mechanism (SG) can be switched during travel at a switching point (SP) between the operating mode with power-split power transmission and a further operating mode with pure hydrostatic power transmission or pure mechanical power transmission without an interruption of the tractive force,
or
wherein the summing planetary gear mechanism (SG) is provided with clutch devices (K1, K2) with which the summing planetary gear mechanism (SG) can be switched during travel at a switching point (SP) between the operating mode with pure mechanical power transmission and a further operating mode with pure hydrostatic power transmission or power-split power transmission without interruption of the tractive force.

2. Power-split transmission according to Claim 1, **characterized in that** equality of the rotational speed of the output element and that of the drive elements of the summing planetary gear mechanism (SG) is present at the switching point (SP) so that it is possible to switch between the operating modes, in particular the operating mode with power-split power transmission and the further operating mode, without correction of the transmission ratio of the hydrostatic transmission (G).

3. Power-split transmission according to Claim 1 or 2, **characterized in that** the operating mode with power-split power transmission is embodied as a work operation from the stationary state of the vehicle up to a limiting velocity (v1) and the further operating mode with pure hydrostatic power transmission or pure mechanical power transmission is embodied as a transport operation between the limiting velocity (v1) and the maximum velocity (vₘₐₓ).

4. Power-split transmission according to Claim 1 or 2, **characterized in that** the operating mode with pure mechanical power transmission is embodied as a work operation from the stationary state of the vehicle up to a limiting velocity (v1), and the further operating mode is embodied with pure hydrostatic power transmission or power-split power transmission as a transport operation between the limiting velocity (v1) and the maximum velocity (vₘₐₓ).

5. Power-split transmission according to one of Claims 1 to 4, **characterized in that** the hydraulic motor (H) is in drive connection with the sun gear (SR) as a first drive element (A1) of the summing planetary gear mechanism (SG), the drive engine (AM) can be placed in drive connection with the ring gear (HR) as a second drive element (A2) of the summing planetary gear mechanism (SG), and the planetary carrier (PT) of the summing planetary gear mechanism (SG) forms the output element, wherein a first clutch device (K1) is provided by means of which the ring gear (HR) can be connected to the drive engine (AM) or disconnected therefrom, and a second clutch device (K2) is provided by means of which the sun gear (SR) can be connected to the planetary carrier (PT) or disconnected therefrom, wherein in the operating mode with power-split power transmission the first clutch device (K1) is closed and the second clutch device (K2) is opened, and in the further operating mode with pure hydrostatic power transmission the first clutch device (K1) is opened and the second clutch device (K2) is closed.

6. Power-split transmission according to Claim 5, **characterized in that** in the operating mode with pure mechanical power transmission the first clutch device (K1) and the second clutch device (K2) are closed.

7. Power-split transmission according to one of Claims 1 to 4, **characterized in that** the hydraulic motor (H) is in drive connection with the sun gear (SR) as a first drive element (A1) of the summing planetary gear mechanism (SG), the drive engine (AM) can be placed in drive connection with the ring gear (HR) as a second drive element (A2) of the summing planetary gear mechanism (SG), the planetary carrier (PT) of the summing planetary gear mechanism (SG) forms the output element, and the drive engine (AM) can be placed in drive connection with the planetary carrier (PT) by means of a drive shaft (DW), wherein a first clutch device (K1) is provided by means of which the ring gear (HR) can be connected to the drive engine (AM) or disconnected therefrom, and a second clutch device (K2) is provided by means of which the drive shaft (DW) can be connected to the planetary carrier (PT) or disconnected therefrom, wherein in the operating mode with power-split power transmission the first clutch device (K1) is closed and the second clutch device (K2) is opened, and in the further operating mode with pure mechanical power transmission, the first clutch device (K1) is opened and the second clutch device (K2) is closed.

8. Power-split transmission according to Claim 7, **characterized in that** in the further operating mode with pure mechanical power transmission the variable displacement pump (P) is in the zero position with zero delivery quantity.

9. Power-split transmission according to Claim 7 or 8, **characterized in that** a further clutch device (K3) is provided by means of the ring gear (HR) can be locked in the stationary state, wherein when the further clutch device (K3) is closed, when the first clutch device (K1) is opened and when the second clutch device (K2) is opened an additional operating mode with purely hydrostatic power transmission can be achieved.

10. Power-split transmission according to one of Claims 1 to 4, **characterized in that** the hydraulic motor (H) can be placed in drive connection with the ring gear (HR) as a first drive element (A1) of the summing planetary gear mechanism (SG), the drive engine (AM) can be placed in drive connection with the sun gear (SR) as a second drive element (A2) of the summing planetary gear mechanism (SG) by means of a drive shaft (DW), and the planetary carrier (PT) of the summing planetary gear mechanism (SG) forms the output element, wherein a first clutch device (K1) is provided by means of which the ring gear (HR) can be connected to the hydraulic motor (H) or disconnected therefrom, and a second clutch device (K2) is provided by means of which the sun gear (SR) can be connected to the planetary carrier (PT) or disconnected therefrom, wherein in the operating mode with power-split power transmission the first clutch device (K1) is closed and the second clutch device (K2) is opened, and in the further operating mode with pure mechanical power transmission the first clutch device (K1) is opened and the second clutch device (K2) is closed.

11. Power-split transmission according to Claim 10, **characterized in that** a further clutch device (K3) is provided by means of which the sun gear (SR) can be connected to the drive shaft (DW) or disconnected therefrom, wherein when the first clutch device (K1) is closed, when the second clutch device (K2) is closed, and when the further clutch device (K3) is opened an additional operating mode with pure hydrostatic power transmission can be achieved.

12. Power-split transmission according to one of Claims 1 to 11, **characterized in that** a manual transmission (S) with at least two shift stages is connected downstream of the summing planetary gear mechanism (SG).

13. Power-split transmission according to Claim 12, **characterized in that** the manual transmission (S) is embodied as a planetary gear mechanism (PG) whose sun gear (SR2) has a drive connection to the planetary carrier (PT) of the summing planetary gear mechanism (SG) and whose planetary carrier (PT2) has a drive connection to the wheel drive or axle drive, wherein a ring gear clutch (HK) for locking the ring gear (HR2) is assigned to the ring gear (HR2) of the planetary gear mechanism (PG), and a connecting clutch (VK) is provided by means of which the sun gear (SR2) can be connected to the planetary carrier (PT2) or disconnected therefrom, wherein in a step-down position as a first shift stage of the manual transmission (S) the ring gear clutch (HK) is closed and the connecting clutch (VK) is opened and in a drive position as a second shift stage of the manual transmission (S) the ring gear clutch (HK) is opened and the connecting clutch (VK) is closed.

14. Power-split transmission according to one of Claims 1 to 13, **characterized in that** the hydraulic motor (H) and the summing planetary gear mechanism (SG) are arranged coaxially with respect to the variable displacement pump (P), wherein the hydraulic motor (H) is arranged between the variable displacement pump (P) and the summing planetary gear mechanism (SG).

15. Power-split transmission according to one of Claims 7 to 14, **characterized in that** the hydraulic motor (H) has an output shaft (TW) which is embodied as a hollow shaft and through which the drive shaft (DW) of the drive engine (AM) extends.

16. Power-split transmission according to one of Claims 1 to 15, **characterized in that** the variable displacement pump (P) is embodied as a variable displacement pump which can be adjusted on both sides.

17. Power-split transmission according to one of Claims 1 to 16, **characterized in that** the hydraulic motor (H) is embodied as a constant motor with a fixed displacement volume.

18. Power-split transmission according to one of Claims 1 to 16, **characterized in that** the hydraulic motor (H) is embodied as a variable displacement motor with an adjustable displacement volume.

19. Power-split transmission according to one of Claims 1 to 18, **characterized in that** the variable displacement pump (P) and the hydraulic motor (H) are embodied coaxially as a compact transmission with a coaxial back-to-back design.

## Revendications

1. Transmission à division de puissance (LG) d'un entraînement de conduite (F) d'un véhicule, comprenant une transmission (G) à variation continue hydrostatique et un engrenage planétaire sommateur (SG) qui est réalisé sous forme d'engrenage planétaire simple qui se compose d'une roue solaire (SR), d'une couronne dentée (HR) et d'un porte-satellites (PT) portant plusieurs satellites (PR), les satellites (PR) étant en prise avec la roue solaire (SR) et la couronne dentée (HR), l'engrenage planétaire sommateur (SG) pouvant être mis en liaison du côté de l'entraînement avec un moteur d'entraînement (AM) du véhicule, en particulier un moteur à combustion interne, et avec la transmission hydrostatique (G), et la transmission hydrostatique (G) comprenant une pompe à débit variable (P) ayant un volume de refoulement variable et un moteur hydraulique (H), le moteur hydraulique (H) étant relié en circuit fermé à la pompe à débit variable (P) au moyen de conduites de fluide sous pression (DM1, DM2), la pompe à débit variable (P) étant entraînée par le moteur d'entraînement (AM), le moteur hydraulique (H) pouvant être amené en liaison d'entraînement en vue de l'entraînement avec un premier élément d'entraînement (A1) de l'engrenage planétaire sommateur (SG) le moteur d'entraînement (AM) pouvant être amené en liaison d'entraînement en vue de l'entraînement avec un deuxième élément d'entraînement (A2) de l'engrenage planétaire sommateur (SG) et un élément de prise de force de l'engrenage planétaire sommateur (SG) étant en liaison d'entraînement avec un entraînement de roue avec un entraînement d'essieu du véhicule, **caractérisée en ce que** l'engrenage planétaire sommateur (SG) présente un mode de fonctionnement avec un transfert d'énergie à puissance divisée, un mode de fonctionnement à transfert d'énergie purement hydrostatique et un mode de fonctionnement à transfert de puissance purement mécanique,
l'engrenage planétaire sommateur (SG) étant pourvu de dispositifs d'embrayage (K1, K2) avec lesquels l'engrenage planétaire sommateur (SG) peut être commuté pendant la conduite au niveau d'un point de commutation (SP) entre le mode de fonctionnement avec transfert de puissance à puissance divisée, et un autre mode de fonctionnement avec un transfert de puissance purement hydrostatique ou avec un transfert de puissance purement mécanique sans interruption de la force de traction ou
l'engrenage planétaire sommateur (SG) étant pourvu de dispositifs d'embrayage (K1, K2) avec lesquels l'engrenage planétaire sommateur (SG) peut être commuté pendant la conduite au niveau d'un point de commutation (SP) entre le mode de fonctionnement avec un transfert de puissance purement mécanique et un autre mode de fonctionnement avec un transfert de puissance purement hydrostatique ou un transfert de puissance à puissance divisée sans interruption de la force de traction.

2. Transmission à division de puissance selon la revendication 1, **caractérisée en ce qu'**au niveau du point de commutation (SP) il se produit une égalité des vitesses de rotation de l'élément de prise de force et des éléments d'entraînement de l'engrenage planétaire sommateur (SG) de sorte que l'on puisse commuter sans correction du rapport de démultiplication de la transmission hydrostatique (G) entre les modes de fonctionnement, en particulier le mode de fonctionnement à transfert de puissance à puissance divisée et l'autre mode de fonctionnement.

3. Transmission à division de puissance selon la revendication 1 ou 2, **caractérisée en ce que** le mode de fonctionnement avec transfert de puissance à puissance divisée est réalisé sous forme de vitesse de travail de l'arrêt du véhicule à une vitesse de conduite limite (v1) et l'autre mode de fonctionnement avec un transfert de puissance purement hydrostatique ou un transfert de puissance purement mécanique est réalisé en tant que vitesse de transport entre la vitesse de conduite limite (v1) et la vitesse de conduite maximale (vₘₐₓ).

4. Transmission à division de puissance selon la revendication 1 ou 2, **caractérisée en ce que** le mode de fonctionnement avec un transfert de puissance mécanique est réalisé sous forme de vitesse de travail de l'arrêt du véhicule à une vitesse de conduite limite (v1) et l'autre mode de fonctionnement est réalisé avec un transfert de puissance purement hydrostatique ou un transfert de puissance à puissance divisée en tant que vitesse de transport entre la vitesse de conduite limite (v1) et la vitesse de conduite maximale (vₘₐₓ).

5. Transmission à division de puissance selon l'une quelconque des revendications 1 à 4, **caractérisée en ce que** le moteur hydraulique (H) est en liaison d'entraînement avec la roue solaire (SR) en tant que premier élément d'entraînement (A1) de l'engrenage planétaire sommateur (SG), le moteur d'entraînement (AM) peut être amené en liaison d'entraînement avec la couronne dentée (HR) en tant que deuxième élément d'entraînement (A2) de l'engrenage planétaire sommateur (SG) et le porte-satellites (PT) de l'engrenage planétaire sommateur (SG) forme l'élément de prise de force, un premier dispositif d'embrayage (K1) étant prévu, au moyen duquel la couronne dentée (HR) peut être connectée au moteur d'entraînement (AM) ou séparée de celui-ci, et un deuxième dispositif d'embrayage (K2) étant prévu, au moyen duquel la roue solaire (SR) peut être connectée au porte-satellites (PT) ou être séparée de celui-ci, le premier dispositif d'embrayage (K1), dans le mode de fonctionnement à transfert de puissance à puissance divisée, étant fermé et le deuxième dispositif d'embrayage (K2) étant ouvert, et dans l'autre mode de fonctionnement avec un transfert de puissance purement hydrostatique, le premier dispositif d'embrayage (K1) étant ouvert et le deuxième dispositif d'embrayage (K2) étant fermé.

6. Transmission à division de puissance selon la revendication 5, **caractérisée en ce que** dans le mode de fonctionnement à transfert de puissance purement mécanique, le premier dispositif d'embrayage (K1) et le deuxième dispositif d'embrayage (K2) sont fermés.

7. Transmission à division de puissance selon l'une quelconque des revendications 1 à 4, **caractérisée en ce que** le moteur hydraulique (H) peut être amené en liaison d'entraînement avec la roue solaire (SR) en tant que premier élément d'entraînement (A1) de l'engrenage planétaire sommateur (SG), le moteur d'entraînement (AM) peut être amené en liaison d'entraînement avec la couronne dentée (HR) en tant que deuxième élément d'entraînement (A2) de l'engrenage planétaire sommateur (SG), le porte-satellites (PT) de l'engrenage planétaire sommateur (SG) forme l'élément de prise de force et le moteur d'entraînement (AM) peut être connecté par entraînement au porte-satellites (PT) par le biais d'un arbre de prise directe (DW), un premier dispositif d'embrayage (K1) étant prévu, au moyen duquel la couronne dentée (HR) peut être connectée ou est connectée au moteur d'entraînement (AM), et un deuxième dispositif d'embrayage (K2) étant prévu, au moyen duquel l'arbre de prise directe (DW) peut être connecté au porte-satellites (PT) ou être séparé de celui-ci, le premier dispositif d'embrayage (K1), dans le mode de fonctionnement à transfert de puissance à puissance divisée, étant fermé et le deuxième positif d'embrayage (K2) étant ouvert, et dans l'autre mode de fonctionnement avec un transfert de puissance purement mécanique, le premier dispositif d'embrayage (K1) étant ouvert et le deuxième dispositif d'embrayage (K2) étant fermé.

8. Transmission à division de puissance selon la revendication 7, **caractérisée en ce que** dans le mode de fonctionnement supplémentaire avec un transfert de puissance purement mécanique, la pompe à débit variable (P) se trouve dans la position nulle avec une quantité refoulée nulle.

9. Transmission à division de puissance selon la revendication 7 ou 8, **caractérisée en ce qu'**un dispositif d'embrayage supplémentaire (K3) est prévu, au moyen duquel la couronne dentée (HR) peut être fixée à l'arrêt, un mode de fonctionnement supplémentaire avec un transfert de puissance purement hydrostatique pouvant être obtenu lorsque le dispositif d'embrayage supplémentaire (K3) est fermé, que le premier dispositif d'embrayage (K1) est ouvert et que le deuxième dispositif d'embrayage (K2) est ouvert.

10. Transmission à division de puissance selon l'une quelconque des revendications 1 à 4, **caractérisée en ce que** le moteur hydraulique (H) peut être amené en liaison d'entraînement avec la couronne dentée (HR) en tant que premier élément d'entraînement (A1) de l'engrenage planétaire sommateur (SG), le moteur d'entraînement (AM) peut être amené en liaison d'entraînement au moyen d'un arbre de prise directe (DW) avec la roue solaire (SR) en tant que deuxième élément d'entraînement (A2) de l'engrenage planétaire sommateur (SG) et le porte-satellites (PT) de l'engrenage planétaire sommateur (SG) forme l'élément de prise de force, un premier dispositif d'embrayage (K1) étant prévu, au moyen duquel la couronne dentée (HR) peut être connectée au moteur hydraulique (H) ou peut être séparée de celui-ci, et un deuxième dispositif d'embrayage (K2) étant prévu, au moyen duquel la roue solaire (SR) peut être connectée au porte-satellites (PT) ou peut être séparée de celui-ci, le premier dispositif d'embrayage (K1), dans le mode de fonctionnement avec transfert de puissance à puissance divisée, étant fermé et le deuxième dispositif d'embrayage (K2) étant ouvert, et dans le mode de fonctionnement supplémentaire avec un transfert de puissance purement mécanique, le premier dispositif d'embrayage (K1) étant ouvert et le deuxième dispositif d'embrayage (K2) étant fermé.

11. Transmission à division de puissance selon la revendication 10, **caractérisée en ce qu'**il est prévu un dispositif d'embrayage supplémentaire (K3) au moyen duquel la roue solaire (SR) peut être connectée à l'arbre de prise directe (DW) ou peut être séparée de celui-ci, un mode de fonctionnement supplémentaire avec un transfert de puissance purement hydrostatique pouvant être obtenu lors que le premier dispositif d'embrayage (K1) est fermé, que le deuxième dispositif d'embrayage (K2) est fermé et que le dispositif d'embrayage supplémentaire (K3) est ouvert.

12. Transmission à division de puissance selon l'une quelconque des revendications 1 à 11, **caractérisée en ce qu'**une transmission à changement de vitesses (S) avec au moins deux rapports de changement de vitesses est montée en aval de l'engrenage planétaire sommateur (SG).

13. Transmission à division de puissance selon la revendication 12, **caractérisée en ce que** la transmission à changement de vitesses (S) est réalisée sous forme de transmission planétaire (PG) dont la roue solaire (SR2) est connectée par entraînement au porte-satellites (PT) de l'engrenage planétaire sommateur (SG) et dont le porte-satellites (PT2) est connecté par entraînement à l'entraînement de roue ou à l'entraînement d'essieu, un accouplement de couronne dentée (HK) pour la fixation de la couronne dentée (HR2) étant associé à la couronne dentée (HR2) de la transmission planétaire (PG) et un accouplement de liaison (VK) étant prévu, au moyen duquel la roue solaire (SR2) peut être connectée au porte-satellites (PT2) ou peut être détachée de celui-ci, dans une position de démultiplication en tant que premier étage de commutation de la transmission à changement de vitesses (S), l'accouplement de couronne dentée (HK) étant fermé et l'accouplement de liaison (VK) étend ouvert et, dans une position de prise directe en tant que deuxième étage de commutation de la transmission à changement de vitesses (S), l'accouplement de couronne dentée (HK) étant ouvert et l'accouplement de liaison (VK) étant fermé.

14. Transmission à division de puissance selon les revendications 1 à 13, **caractérisée en ce que** le moteur hydraulique (H) et l'engrenage planétaire sommateur (SG) sont disposés coaxialement par rapport à la pompe à débit variable (P), le moteur hydraulique (H) étant disposé entre la pompe à débit variable (P) et l'engrenage planétaire sommateur (SG).

15. Transmission à division de puissance selon l'une quelconque des revendications 7 à 14, **caractérisée en ce que** le moteur hydraulique (H) présente un arbre de prise de force (TW) réalisé sous forme d'arbre creux, à travers lequel s'étend l'arbre de prise directe (DW) du moteur d'entraînement (AM).

16. Transmission à division de puissance selon l'une quelconque des revendications 1 à 15, **caractérisée en ce que** la pompe à débit variable (P) est réalisée sous forme de pompe à débit variable à déplacement bilatéral.

17. Transmission à division de puissance selon l'une quelconque des revendications 1 à 16, **caractérisée en ce que** le moteur hydraulique (H) est réalisé sous forme de moteur à cylindrée constante.

18. Transmission à division de puissance selon l'une quelconque des revendications 1 à 16, **caractérisée en ce que** le moteur hydraulique (H) est réalisé sous forme de moteur à cylindrée variable.

19. Transmission à division de puissance selon l'une quelconque des revendications 1 à 18, **caractérisée en ce que** la pompe à débit variable (P) et le moteur hydraulique (H) sont réalisés sous forme de transmission compacte de construction coaxiale dos à dos.
